# EUROPÄISCHE PATENTANMELDUNG

(11) **EP 4 741 258 A1**
(43) Veröffentlichungstag der Anmeldung: **13.05.2026**
(21) Anmeldenummer: 25199862.1
(22) Anmeldetag: 03.09.2025
(51) Int. Cl.: B62D 1/28, B62D 15/02

(54) **ELEKTROMECHANISCHES LENKSYSTEM, VERFAHREN ZUM BETREIBEN EINES SOLCHEN UND FAHRZEUG**

(30) Priorität: 12.11.2024 DE 102024133089
(71) Anmelder: AUDI AG, 85057 Ingolstadt (DE)
(72) Erfinder: Patzelt, Michael, 85276 Pfaffenhofen (DE); Kahnt, Andreas, 72124 Pliezhausen (DE)

(57) **Zusammenfassung**

Die Erfindung betrifft ein elektromechanisches Lenksystem (100) mit einer Assistenzeinrichtung (102) zur Lenkunterstützung, mit einer Lenkhandhabe (104), mit einem Lenkwinkelsensor (106), mit mindestens einer Lenkachse (110), mit einem Aktor (112), und mit einem Lenksteuergerät (114), das eingerichtet ist, den erfassten Lenkwinkel in einen Radlenkwinkel zu übersetzen, wobei der Aktor (112) mittels des Lenksteuergeräts (114) veranlasst wird, den vom Lenksteuergerät (114) vorgegebenen Radlenkwinkel einzustellen, und wobei das Lenksteuergerät (114) ferner eingerichtet ist, die Assistenzeinrichtung (102) in der Notfall- oder Gefahrensituation zu aktivieren, was eine Entkoppelung des Radlenkwinkels vom Lenkwinkel der Lenkhandhabe (104) bewirkt, indem der Aktor (112) den Radlenkwinkel unabhängig vom Lenkwinkel des Lenkwinkelsensors (106) verändert oder einstellt. Das Lenksteuergerät (110) ist eingerichtet ist, eine Bedienung der Lenkhandhabe (104) während der aktivierten Assistenzeinrichtung (102) zu überwachen, wobei die Entkoppelung des Radlenkwinkels vom Lenkwinkel der Lenkhandhabe (104) in mehreren Stufen oder stufenlos dann aufgelöst wird, wenn a) von einem der Lenkhandhabe (104) zugordneten Drehmomentsensor (108) ein vordefiniertes Drehmoment oder eine vordefinierte zeitliche Drehmomentänderung erfasst wird, oder b) von dem Lenkwinkelsensor (106) eine vorgegebene zeitliche Lenkwinkeländerung erfasst wird. Die Erfindung betrifft auch ein Verfahren zum Betreiben eines solchen Lenksystem (100) sowie ein Fahrzeug (200).

## Beschreibung

Die Erfindung betrifft ein elektromechanisches Lenksystem, insbesondere ein elektromechanisches Lenksystem für zweispurige Fahrzeuge. Des Weiteren betrifft die Erfindung ein Fahrzeug mit einem derartigen Lenksystem und ein Verfahren zum Betreiben eines solchen elektromechanischen Lenksystems.

Elektromechanische Lenksysteme, wie zum Beispiel Steer-by-wire-Systeme, werden vor allem zur Steuerung von zweispurigen Fahrzeugen eingesetzt. Bei Steer-by-wire- Lenksystemen ist zwischen einer Lenkhandhabe und einem Lenkgetriebe keine mechanische Verbindung vorhanden. Dabei ist eine vollständige elektronische Kraft- und Wegansteuerung von sowohl der Lenkhandhabe als auch den gelenkten Fahrzeugrädern realisiert.

Moderne Assistenzeinrichtungen in Fahrzeugen können den Fahrer bei verschiedenen Fahrmanövern oder Fahrsituationen unterstützen. Zum Beispiel können moderne Assistenzeinrichtungen automatisch die Spur halten, den Abstand zu einem vorausfahrenden Fahrzeug regeln und halten oder bei einer Gefahrenbremsung unterstützen. Ein Assistenzeingriff durch eine Assistenzeinrichtung erfolgt also in solchen Notfall- und Gefahrensituationen.

Assistenzeinrichtungen besitzen während eines Lenkeingriffs die volle Steuerungsautorität und können bei Fehlinterpretationen das Fahrzeug bereits Auslenken, bevor der Fahrer die Situation selbst vollständig einschätzen kann. Ein solcher autonomer Eingriff der Assistenzeinrichtung kann einen Fahrer verunsichern. Gerade beim Einsatz von Steer-by-Wire-Lenksystemen fehlt dem Nutzer die unmittelbare Rückmeldung über den Fahrzustand während des Assistenzeingriffs, da mangels mechanischer Verbindung zum Rad bzw. den Rädern keine Drehmomente mehr auf die Lenkhandhabe übertragen werden. Außerdem wird dem Fahrer keine Rückmeldung über die von der Assistenzeinrichtung empfohlene Trajektorie gegeben.

In der DE102023200693A1 wird ein Assistenzsystem zum autonomen Bewegen eines Fahrzeugs in einen optimierten dynamischen Fahrzustand und ein Fahrzeug beschrieben, welches mit einem System zur Steuerung eines Fahrzeugs durch ein Assistenzsystem zum autonomen Bewegen eines Fahrzeugs in einen optimierten dynamischen Fahrzustand ausgestattet ist. Dabei wird ein System zur Steuerung des Fahrzeugs vorgeschlagen, welches auf Wunsch mit dem Fahrer interagiert und die Fahrzeugsteuerung den Wünschen und/oder dem Können des Fahrers anpasst. Im Kern stellt diese Druschrift darauf ab, eine Datenbank zu implementieren, welche mehrere Fahrer aufzeichnet und die Eingriffe darauf basierend ausführt. Damit wird das Fahrerverhalten von einer KI analysiert und in einer Datenbank gespeichert. Es erfolgt eine Fahrerrückmeldung basierend auf einer Abweichung zur Sollvorgabe und diese wird gespeichert. Es besteht die Gefahr, dass die Datenbank ein falsches Verhalten vom Fahrer lernt, wobei aber mehrere Fahrer und Fahrmodi in dieser Datenbank gespeichert werden, die dann als Datenbasis für den Assistenzeingriff bereitgestellt ist.

In der DE102021205110A1 werden eine Vorrichtung und ein Verfahren zum Steuern eines Fahrzeugs bei Aquaplaning und ein Fahrzeug beschrieben. Dabei ist die Vorrichtung ausgebildet, um ansprechend auf ein einen Aquaplaningzustand an der Vorderachse des Fahrzeugs repräsentierendes Erkennungssignal, entkoppelt zu einem eine gewünschte Fahrtrichtungsänderung des Fahrzeugs repräsentierenden Richtungssignal, ein Vorderachssignal zum Bewirken eines an den Aquaplaningzustand angepassten vorderen Lenkwinkels bereitzustellen.

In der DE102016217772A1 werden eine Vorrichtung, ein Betriebsverfahren und eine elektronische Steuereinheit zur Steuerung eines zumindest teilweise automatisiert fahrbaren Fahrzeugs beschrieben. Die darin beschriebene Assistenzeinrichtung kann entweder eine Entkoppelung der Lenkwinkelstellung des Lenkrads bezüglich der Radwinkelstellung bewirken oder eine (vollständige) Koppelung.

Es ist daher die Aufgabe der vorliegenden Erfindung, ein elektromechanisches Lenksystem, ein Verfahren zum Betreiben eines solchen sowie und ein Fahrzeug mit einem solchen bereitzustellen, die zu einem verbesserten Umschalten ausgehend von einem Eingriff der Assistenzeinrichtung zu einem Nutzereingriff beitragen.

Diese Aufgabe wird mit einem elektromechanischen Lenksystem mit den Merkmalen des Anspruchs 1, durch ein Verfahren mit den Merkmalen des Anspruchs 5 und durch ein Fahrzeug mit den Merkmalen des Anspruchs 10 gelöst. Vorteilhafte Ausgestaltungen mit zweckmäßigen Weiterbildungen der Erfindung sind in den abhängigen Ansprüchen angegeben.

Das erfindungsgemäße elektromechanische Lenksystem umfasst eine Assistenzeinrichtung zur Lenkunterstützung, insbesondere in Notfall- oder Gefahrensituationen. Es ist aber auch möglich, dass die Assistenzeinrichtung des erfindungsgemäßen Lenksystems als Unterstützung bei Komfortfunktionen bzw. Autonomen-/Teilautonomen Fahren eingesetzt wird. Insbesondere beim teilautonomen Fahren kann eine schnellere Übergabe zwischen dem Lenken durch den Fahrer und dem Lenken durch die Assistenzeinrichtung erfolgen, wobei es auch möglich ist, das Lenkrad gerade zu halten. Der Fahrer kann durch den Lenkeingriff die Kontrolle zurückerhalten sobald er ein Lenkradmoment aufbringt bzw. auch eine Lenkmomentschwelle überschreitet. Die Assistenzeinrichtung des erfindungsgemäßen Lenksystems lässt sich auch bei einer autonomen Parkfunktion nutzen, bei der das Lenkrad gerade gestellt ist und der Fahrer im Notfall eingreifen können muss.

Für eine Fahrtrichtungsvorgabe durch den Nutzer ist eine Lenkhandhabe vorhanden, die beispielsweise als ein Lenkrad gebildet ist. Es sind jedoch auch andere Arten von Lenkhandhaben möglich, so beispielsweise ein Joystick oder auch einzelne Tasten. Jedenfalls ist der Lenkhandhabe ein Lenkwinkelsensor, wobei der Lenkwinkelsensor eingerichtet ist, einen Lenkwinkel der Lenkhandhabe zu erfassen. Ferner umfasst das elektromechanische Lenksystem mindestens eine Lenkachse, welcher ein Aktor zugeordnet ist. Es ist ein Lenksteuergerät vorhanden, das eingerichtet ist, den erfassten Lenkwinkel in einen Radlenkwinkel zu übersetzen, wobei der Aktor mittels des Lenksteuergeräts veranlasst wird, den vom Lenksteuergerät vorgegebenen Radlenkwinkel einzustellen, und wobei das Lenksteuergerät ferner eingerichtet ist, die Assistenzeinrichtung, beispielsweise in einer Notfall- oder Gefahrensituation, zu aktivieren. Das Aktivieren der Assistenzeinrichtung bewirkt eine, zumindest teilweise oder auch vollständige, Entkoppelung des Radlenkwinkels vom Lenkwinkel der Lenkhandhabe, indem der Aktor den Radlenkwinkel unabhängig vom Lenkwinkel des Lenkwinkelsensors verändert oder einstellt.

Erfindungsgemäß ist das Lenksteuergerät eingerichtet, eine Bedienung der Lenkhandhabe während der aktivierten Assistenzeinrichtung zu überwachen, wobei die Entkoppelung des Radlenkwinkels vom Lenkwinkel der Lenkhandhabe in mehreren Stufen oder stufenlos dann aufgelöst wird, wenn a) von einem der Lenkhandhabe zugordneten Drehmomentsensor ein vordefiniertes Drehmoment oder eine vordefinierte zeitliche Drehmomentänderung erfasst wird, oder wenn b) von dem Lenkwinkelsensor eine vorgegebene zeitliche Lenkwinkeländerung erfasst wird.

Auf diese Weise ist ein schneller Durchgriff des Fahrers soll Anhand des ermittelten Lenkradhandmoments oder der ermittelten Lenkwinkeländerung sichergestellt. Dadurch muss der Eingriff der Assistenzeinrichtung aber nicht abgebrochen oder ausgesetzt werden, sondern kann weiterhin parallel zum Nutzereingriff aktiv sein, ohne dabei den Nutzer in seiner Richtungsentscheidung zu bevormunden oder zu überstimmen. Gleichzeitig ermöglicht das erfindungsgemäße Lenksystem mit der Assistenzeinrichtung eine frühzeitige Entschärfung von Notfall- oder Gefahrensituation, indem es - innerhalb vordefinierter Sicherheitsgrenzen - Radlenkwinkel zulässt, die eine Abweichung vom Lenkwinkel der Lenkhandhabe darstellen (Entkoppelung).

Als Drehmomentsensor kommt beispielsweise ein magnetoresistives Element oder mehrere solcher zum Einsatz, um die Verdrehung des Lenkrads zu erfassen. Alternativ oder ergänzend wird ein Dehnungsmessstreifen oder mehrere solcher verwendet, um die durch das eingeleitete Drehmoment verursachte Dehnung messen. Alternativ oder ergänzend kann als Lenkhandhabe ein vollständiges Messlenkrad genutzt werden, welches nicht nur das Drehmoment, sondern auch den Rotationswinkel und die Winkelgeschwindigkeit bestimmen kann.

Der Lenkwinkel entspricht derjenigen Winkelstellung, die der Lenkwinkelsensor an der Lenkhandhabe, beispielsweise dem Lenkrad erfasst. Als Radlenkwinkel wird die Winkelstellung der Räder oder ihrer Aufnahmen bezeichnet.

Das elektromechanisches Lenksystem ist vorzugsweise als ein lenksäulenfreies Steer-by-Wire-Lenksystem gebildet, wobei es - anders als bei einer Servolenkung - keine unmittelbare, aufgrund mechanischer Koppelung, haptische Rückmeldung über den Fahrzustand an den Nutzer geben kann. Hier ist es umso wichtiger, dass eine mehrstufige oder kontinuierliche Rückstufung der Entkoppelung des Lenkwinkels zum Radlenkwinkel erfolgt, und dass der Nutzer zunehmend eine Rückmeldung über seinen steigenden Einfluss auf die Radwinkelstellung erfährt.

Es hat sich als vorteilhaft erwiesen, wenn das Lenksteuergerät eingerichtet ist, die Entkoppelung des Radlenkwinkels vom Lenkwinkel beim Erfassen des vordefinierten Drehmoments oder der vordefinierten Drehmomentänderung an der Lenkhandhabe vollständig aufzulösen. Auf diese Weise lässt sich der Assistenzeingriff der Assistenzeinrichtung abbauen und gleichzeitiger Möglichkeit eines Nutzereingriffs; und zwar solange, bis die Assistenzfunktion vollständig beendet ist.

Um den Nutzer beim tatsächlich Eintritt einer Notfall- oder Gefahrensituation nicht sogleich die Kontrolle über die Lenkung zurückzugeben, und um zunächst die umgangssprachlich als "Schrecksekunde" bezeichnete Zeit abzuwarten, ist es bevorzugt, wenn das Lenksteuergerät eingerichtet ist, die Bedienung der Lenkhandhabe erst nach Ablauf eines vorgegebenen Zeitintervalls nach dem Aktivieren des Assistenzeinrichtung zu überwachen. Rein beispielhaft könnte dieses Zeitintervall von 0,2 Sekunden bis 3 Sekunden andauern. Die vorliegende Erfindung ist aber nicht auf dieses Zeitintervall festgelegt und andere Zeiträume sind ebenfalls möglich.

Ein sanfter Übergang vom Assistenzeingriff zurück zur vollständigen Nutzerhoheit lässt sich dadurch bewirken, dass das Lenksteuergerät eingerichtet ist, die Entkoppelung des Radlenkwinkels vom Lenkwinkel während eines vordefinierten Zeitraums zurückzuführen, so dass während dieses Zeitraums parallel zum Eingriff der Assistenzeinrichtung auch ein Nutzereingriff ermöglicht ist. Rein beispielhaft könnte dieser Zeitraum fünf Sekunden und weniger sein. Die vorliegende Erfindung ist aber nicht auf diesen Zeitraum festgelegt und andere Zeiträume sind ebenfalls möglich.

Der Assistenzeingriff lässt sich jedenfalls über den vordefinierten Zeitraum vollständig deaktivieren. Es ist die Möglichkeit vorhanden, dass der Assistenzeingriffs linear deaktiviert wird. In Fällen von Fehleinschätzungen der Assistenzeinrichtung kann jedoch alternativ oder ergänzend ein exponentielles Deaktivieren des Assistenzeingriffs erfolgen.

Der Assistenzeingriff lässt sich alternativ oder ergänzend über den vordefinierten Verlauf des einwirkenden Drehmoments (Handmomentenschwelle an der Lenkhandhabe) vollständig deaktivieren. Es ist die Möglichkeit vorhanden, dass der Assistenzeingriffs linear deaktiviert wird. In Fällen von Fehleinschätzungen der Assistenzeinrichtung kann jedoch alternativ oder ergänzend ein exponentielles Deaktivieren des Assistenzeingriffs erfolgen. Die Stärke des Assistenzeingriffs lässt sich auch anhand von vorgegebenen Drehmomentstufen realisieren.

Die in Verbindung mit dem elektromechanischen Lenksystem vorstehend erläuterten Vorteile, vorteilhaften Ausgestaltungen und Wirkungen gelten in gleicher Weise für das erfindungsgemäße Verfahren zum Betreiben eines solchen elektromechanischen Lenksystems.

Das erfindungsgemäße Verfahren umfasst die folgenden Schritte:
- Aktivieren einer Assistenzeinrichtung zur Lenkunterstützung, beispielsweise beim Erfassen einer Notfall- oder Gefahrensituation, wobei eine Entkoppelung eines Radlenkwinkels von einem Lenkwinkel einer Lenkhandhabe erfolgt und der Radlenkwinkel, zumindest teilweise, unabhängig vom Lenkwinkel eines Lenkwinkelsensors der Lenkhandhabe verändert oder eingestellt wird, (hierbei erfolgt durch eine Vorsteuerung der Achse eine schnellere Fahrzeugreaktion bzw. ein erhöhter Fahrzeugquerversatz innerhalb der ersten Sekunden eines Notmanövers, wobei die Kontrolle durch den Fahrer gleichzeitig aber beibehalten wird),
- Überwachen, ob eine Bedienung der Lenkhandhabe während der aktivierten Assistenzeinrichtung erfolgt, und
- Auflösen der Entkoppelung des Radlenkwinkels vom Lenkwinkel der Lenkhandhabe in mehreren Stufen oder stufenlos,

wenn a) von einem der Lenkhandhabe zugordneten Drehmomentsensor ein vordefiniertes Drehmoment oder eine vordefinierte zeitliche Drehmomentänderung erfasst wird,
oder wenn b) von dem Lenkwinkelsensor eine vorgegebene zeitliche Lenkwinkeländerung erfasst wird.

Auch hierdurch liegt also ein Verfahren vor, bei welchem der Eingriff der Assistenzeinrichtung nicht abgebrochen oder gänzlich ausgesetzt wird, sondern weiterhin parallel zum Nutzereingriff aktiv ist, ohne dabei den Nutzer in seiner Richtungsentscheidung zu bevormunden oder zu überstimmen.

Um die bereits erwähnten "Schrecksekunde" abzuwarten ist es von Vorteil, wenn das Überwachen der Bedienung der Lenkhandhabe erst nach Ablauf eines vorgegebenen Zeitintervalls nach dem Aktivieren der Assistenzeinrichtung erfolgt. Es ist jedoch bevorzugt, dass innerhalb des vorgegebenen Zeitintervalls nur beim Überschreiten einer Drehmomentschwelle (rein beispielhaft bei 3 Nanometern (nm) ) einen manuellen Eingriff und ein Deaktivieren des Assistenzeingriffs erlaubt. Auf diese Weise ist also innerhalb des vorgegebenen Zeitintervalls der "Schrecksekunde" die Handmomentenschwelle gegenüber derjenigen in einem Normalbetrieb erhöht.

Der Assistenzeingriff lässt sich alternativ oder ergänzend erst bei Überschreiten eines vordefinierten Drehmoments oder über den vordefinierten Verlauf des einwirkenden Drehmoments vollständig deaktivieren (beispielsweise bei Erreichen einer Drehmomentschwelle). Es ist die Möglichkeit vorhanden, dass der Assistenzeingriffs linear deaktiviert wird. In Fällen von Fehleinschätzungen der Assistenzeinrichtung kann jedoch alternativ oder ergänzend ein exponentielles Deaktivieren des Assistenzeingriffs erfolgen. Die Stärke des Assistenzeingriffs lässt sich auch anhand von vorgegebenen Drehmomentstufen realisieren.

Es ist alternativ oder ergänzend bevorzugt, dass die Entkoppelung des Radlenkwinkels vom Lenkwinkel während eines vordefinierten Zeitraums gelöst wird, so dass während dieses Zeitraums parallel zum Eingriff der Assistenzeinrichtung auch ein Nutzereingriff erfolgen kann. Dieser Zeitraum kann beispielsweise von zwei Sekunden bis zehn Sekunden andauern. Der Zeitraum ist beispielsweise fünf Sekunden und weniger. Die vorliegende Erfindung ist aber nicht auf diese Zeiträume festgelegt, so dass auch andere Zeiträume ebenfalls möglich sind.

Es ist in einer Variante von Vorteil, wenn die Entkoppelung während des vordefinierten Zeitraums linear zurückgeführt wird. Alternativ kann in einer anderen Variante die Entkoppelung während des vordefinierten Zeitraums exponentiell zurückgeführt werden.

Die in Verbindung mit dem elektromechanischen Lenksystem und dem Verfahren vorstehend erläuterten Vorteile, vorteilhaften Ausgestaltungen und Wirkungen gelten in gleicher Weise für das erfindungsgemäße Fahrzeug, insbesondere Kraftfahrzeug, mit einem solchen elektromechanischen Lenksystem.

Die vorstehend in der Beschreibung genannten Merkmale und Merkmalskombinationen sowie die nachfolgend in der Figurenbeschreibung und/oder in der Figur alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Es sind somit auch Ausführungen als von der Erfindung umfasst und offenbart anzusehen, die in der Figur nicht explizit gezeigt oder erläutert sind, jedoch durch separierte Merkmalskombinationen aus den erläuterten Ausführungen hervorgehen und erzeugbar sind.

Weitere Vorteile, Merkmale und Einzelheiten der Erfindung ergeben sich aus den Ansprüchen, der nachfolgenden Beschreibung bevorzugter Ausführungsformen sowie anhand der Zeichnung, dabei zeigt:

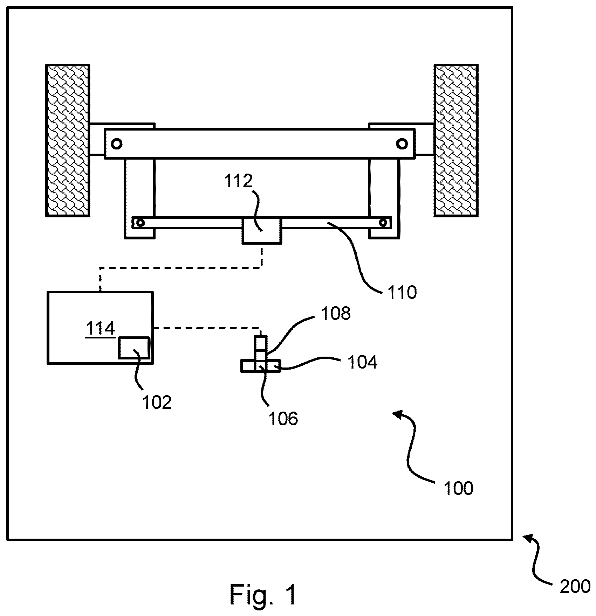

- Fig. 1: eine schematische Darstellung eines Fahrzeugs mit einem erfindungsgemäßen Lenksystem.

Figur 1 zeigt ein Fahrzeug 200 mit einem elektromechanischen Lenksystem 100, welches vorliegend als Steer-by-wire-Lenksystem gebildet ist. Es ist aber auch möglich, dass das Lenksystem 100 bei einer klassischen Lenkung mit einer Lenksäule verwendet wird.

Das elektromechanische Lenksystem 100 umfasst eine Lenkhandhabe 104, zum Beispiel Lenkrad, wobei der Lenkhandhabe 104 ein Lenkwinkelsensor 106 zugeordnet ist. Der Lenkwinkelsensor 106 ist eingerichtet ist, einen Lenkwinkel der Lenkhandhabe 104 zu erfassen. Außerdem ist der Lenkhandhabe 104 ein Drehmomentsensor 108 zugeordnet mit welchem das von einem Nutzer in den Lenkhandhabe 104 eingebrachte Drehmoment erfasst werden kann.

Ferner umfasst das elektromechanische Lenksystem 100 eine Lenkachse 110 und einen der Lenkachse 110 zugeordneten Aktor 112.

Die Werte des Lenkwinkelsensors 106 und des Drehmomentsensors 108 werden einem Lenkwinkelsteuergerät 114 zur weiteren Verwertung zugeleitet. Das Lenksteuergerät 114 ist derart eingerichtet, dass es den erfassten Lenkwinkel in einen Radlenkwinkel übersetzen kann, wobei der Aktor 112 vom Lenksteuergerät 114 veranlasst wird, den vom Lenksteuergerät 114 vorgegebenen, mithin errechneten, Radlenkwinkel einzustellen.

Das erfindungsgemäße elektromechanische Lenksystem 100 ist mit einer Assistenzeinrichtung 102 zur Lenkunterstützung in Notfall- oder Gefahrensituationen ausgestattet. Diese Assistenzeinrichtung 102 kann als Funktion in dem Lenksteuergerät 114 implementiert sein. Das Lenksteuergerät 114 ist in anderen Worten also eingerichtet, die Assistenzeinrichtung 102 in der Notfall- oder Gefahrensituation zu aktivieren. Das Erfassen einer solchen Situation basiert beispielsweise auf einer sensorbasierten, beispielsweise optischen Auswertung der Fahrbahn und/oder der Umgebung des Fahrzeugs 200 und des Lenksystems 100.

Tritt also eine Notfall- oder Gefahrensituation ein, so wird die Assistenzeinrichtung 102 des elektromechanischen Assistenzsystems 100 aktiviert. Das Aktivieren der Assistenzeinrichtung 102 bewirkt dann eine Entkoppelung des Radlenkwinkels vom Lenkwinkel der Lenkhandhabe 104, indem der Aktor 112 den Radlenkwinkel unabhängig vom Lenkwinkel des Lenkwinkelsensors 106 verändert oder einstellt. In anderen Worten wird also der Nutzer von der Lenkung oder der Veränderung der Fahrtrichtung - zumindest in einem ersten Schritt - ausgeschlossen.

Es könnte der Fall eintreten, dass der Nutzer erkennt, dass die erfasste Notfall- oder Gefahrensituation keine ist; mithin also eine Fehlinterpretation der Situation der Assistenzeinrichtung 104, des Lenksteuergeräts 114 oder auch eines übergeordneten Steuergeräts vorliegt.

Aus diesem Grund und für solche Situationen der Fehlinterpretation ist das Lenksteuergerät 110 eingerichtet, eine Bedienung der Lenkhandhabe 104 während der aktivierten Assistenzeinrichtung 102 zu überwachen. Doch die Entkoppelung des Radlenkwinkels vom Lenkwinkel der Lenkhandhabe 104 wird in mehreren Stufen oder stufenlos dann aufgelöst, wenn von dem Drehmomentsensor 108 ein vordefiniertes Drehmoment oder eine vordefinierte zeitliche Drehmomentänderung erfasst wird. Alternativ oder ergänzend kann die Schwere des Assistenzeingriffs auch dann in mehreren Stufen oder stufenlos reduziert werden, wenn von dem Lenkwinkelsensor 106 eine vorgegebene zeitliche Lenkwinkeländerung erfasst wird.

Dabei wird die Entkoppelung des Radlenkwinkels vom Lenkwinkel beim Erfassen des vordefinierten Drehmoments oder der vordefinierten Drehmomentänderung an der Lenkhandhabe 104 vollständig auflöst, insbesondere über einen vorgegebenen Zeitraum. Das Lenksteuergerät 114 ist mit anderen Worten also eingerichtet, die Entkoppelung des Radlenkwinkels vom Lenkwinkel während eines vordefinierten Zeitraums zurückzuführen, so dass während dieses Zeitraums parallel zum Eingriff der Assistenzeinrichtung 102 auch ein Nutzereingriff ermöglicht ist.

Um jedoch einen zu plötzlichen Eingriff des Nutzers, beispielsweise während der "Schrecksekunde" zu verhindern, ist das Lenksteuergerät 114 vorliegend derart eingerichtet, dass die Bedienung der Lenkhandhabe 104 erst nach Ablauf eines vorgegebenen Zeitintervalls nach dem Aktivieren der Assistenzeinrichtung 102 überwacht wird. Somit kann auch erst nach dem Beginn der Überwachung auch die Abhängigkeit zwischen dem Lenkwinkel und dem Radlenkwinkel wieder hergestellt werden. Es ist die Möglichkeit vorhanden, dass der Assistenzeingriff linear deaktiviert wird. Alternativ kann der Assistenzeingriff auch exponentielle deaktiviert werden, beispielsweise um die schon erwähnte "Schrecksekunde" abzuwarten. Es ist jedoch bevorzugt, wenn der Assistenzeingriff durch die Assistenzeinrichtung 102 alternativ oder ergänzend bei Erreichen einer vordefinierten Drehmomentschwelle oder auch über einen vordefinierten Verlauf des einwirkenden Drehmoments auf die Lenkhandhabe 104 vollständig deaktiviert wird. Die Stärke des Assistenzeingriffs lässt sich auch anhand von vorgegebenen Drehmomentstufen realisieren.

Das mit dem vorstehend erläuterten elektromechanischen Lenksystem 100 ausgerüstete Fahrzeug 200 zeichnet sich also durch eine erhöhte Betriebssicherheit aus.

### BEZUGSZEICHENLISTE:

- 100: Lenksystem
- 102: Assistenzeinrichtung
- 104: Lenkhandhabe
- 106: Lenkwinkelsensor
- 108: Drehmomentsensor
- 110: Lenkachse
- 112: Aktor
- 114: Lenksteuergerät
- 200: Fahrzeug

## Patentansprüche

1. Elektromechanisches Lenksystem (100) mit einer Assistenzeinrichtung (102) zur Lenkunterstützung,
mit einer Lenkhandhabe (104),
mit einem der Lenkhandhabe (104) zugeordneten Lenkwinkelsensor (106), wobei der Lenkwinkelsensor (106) eingerichtet ist, einen Lenkwinkel der Lenkhandhabe (104) zu erfassen,
mit mindestens einer Lenkachse (110),
mit einem der Lenkachse (110) zugeordneten Aktor (112),
und mit einem Lenksteuergerät (114), das eingerichtet ist, den erfassten Lenkwinkel in einen Radlenkwinkel zu übersetzen, wobei der Aktor (112) mittels des Lenksteuergeräts (114) veranlasst wird, den vom Lenksteuergerät (114) vorgegebenen Radlenkwinkel einzustellen,
und wobei das Lenksteuergerät (114) ferner eingerichtet ist, die Assistenzeinrichtung (102) in der Notfall- oder Gefahrensituation zu aktivieren, wobei das Aktivieren der Assistenzeinrichtung (102) eine, zumindest teilweise, Entkoppelung des Radlenkwinkels vom Lenkwinkel der Lenkhandhabe (104) bewirkt, indem der Aktor (112) den Radlenkwinkel unabhängig vom Lenkwinkel des Lenkwinkelsensors (106) verändert oder einstellt,
**dadurch gekennzeichnet, dass**
das Lenksteuergerät (110) eingerichtet ist, eine Bedienung der Lenkhandhabe (104) während der aktivierten Assistenzeinrichtung (102) zu überwachen,
wobei die Entkoppelung des Radlenkwinkels vom Lenkwinkel der Lenkhandhabe (104) in mehreren Stufen oder stufenlos dann aufgelöst wird, wenn
a) von einem der Lenkhandhabe (104) zugordneten Drehmomentsensor (108) ein vordefiniertes Drehmoment oder eine vordefinierte zeitliche Drehmomentänderung erfasst wird,
oder
b) von dem Lenkwinkelsensor (106) eine vorgegebene zeitliche Lenkwinkeländerung erfasst wird.

2. Elektromechanisches Lenksystem (100) nach Anspruch 1, **dadurch gekennzeichnet, dass** ein lenksäulenfreies Steer-by-Wire-Lenksystem vorliegt.

3. Elektromechanisches Lenksystem (100) nach Anspruch 1 oder 2,
**dadurch gekennzeichnet, dass** das Lenksteuergerät (114) eingerichtet ist, die Bedienung der Lenkhandhabe (104) erst nach Ablauf eines vorgegebenen Zeitintervalls nach dem Aktivieren der Assistenzeinrichtung (102) zu überwachen.

4. Elektromechanisches Lenksystem (100) nach einem der Ansprüche 1 bis 3, **dadurch gekennzeichnet, dass** das Lenksteuergerät (114) eingerichtet ist, die Entkoppelung des Radlenkwinkels vom Lenkwinkel während eines vordefinierten Zeitraums zurückzuführen, so dass während dieses Zeitraums parallel zum Eingriff der Assistenzeinrichtung (102) auch ein Nutzereingriff ermöglicht ist.

5. Verfahren zum Betreiben eines elektromechanischen Lenksystems (100) nach einem der Ansprüche 1 bis 4, umfassend die Schritte:
- Aktivieren einer Assistenzeinrichtung (104) zur Lenkunterstützung beispielsweise beim Erfassen einer Notfall- oder Gefahrensituation, wobei eine Entkoppelung eines Radlenkwinkels von einem Lenkwinkel einer Lenkhandhabe (104) erfolgt und, zumindest teilweise, der Radlenkwinkel unabhängig vom Lenkwinkel eines Lenkwinkelsensors (106) der Lenkhandhabe (108) verändert oder eingestellt wird,
- Überwachen, ob eine Bedienung der Lenkhandhabe (104) während der aktivierten Assistenzeinrichtung (102) erfolgt, und
- Auflösen der Entkoppelung des Radlenkwinkels vom Lenkwinkel der Lenkhandhabe (104) in mehreren Stufen oder stufenlos,
wenn a) von einem der Lenkhandhabe (104) zugordneten Drehmomentsensor (108) ein vordefiniertes Drehmoment oder eine vordefinierte zeitliche Drehmomentänderung erfasst wird,
oder wenn b) von dem Lenkwinkelsensor (106) eine vorgegebene zeitliche Lenkwinkeländerung erfasst wird.

6. Verfahren nach Anspruch 5, **dadurch gekennzeichnet, dass** das Überwachen der Bedienung der Lenkhandhabe (104) erst nach Ablauf eines vorgegebenen Zeitintervalls nach dem Aktivieren der Assistenzeinrichtung (102) erfolgt.

7. Verfahren nach Anspruch 5 oder 6, **dadurch gekennzeichnet**, die Entkoppelung des Radlenkwinkels vom Lenkwinkel während eines vordefinierten Zeitraums gelöst wird, so dass während dieses Zeitraums parallel zum Eingriff des Assistenzeinrichtung (102) auch ein Nutzereingriff erfolgen kann.

8. Verfahren nach einem der Ansprüche 5 bis 7, **dadurch gekennzeichnet, dass** die Entkoppelung während des vordefinierten Zeitraums linear zurückgeführt wird.

9. Verfahren nach einem der Ansprüche 5 bis 7, **dadurch gekennzeichnet, dass** die Entkoppelung während des vordefinierten Zeitraums exponentiell zurückgeführt wird.

10. Fahrzeug (200) mit einem elektromechanischen Lenksystem (100) nach einem der Ansprüche 1 bis 4.
